# EUROPEAN PATENT APPLICATION

(11) **EP 1 628 469 A2**
(43) Date of publication of application: **22.02.2006**
(21) Application number: 05254831.0
(22) Date of filing: 02.08.2005
(51) Int. Cl.: H04N 5/073

(54) **Image signal processing apparatus and phase synchronization method**

(30) Priority: 17.08.2004 JP 2004237330; 14.06.2005 JP 2005173450
(71) Applicant: SONY CORPORATION, Tokyo (JP)
(72) Inventor: Ebata, Kazuyoshi, Sony Corporation, Shinagawa-ku, Tokyo (JP); Noguchi, Yasushi, Sony Corporation, Shinagawa-ku, Tokyo (JP); Aoki, Kazuo, Sony Corporation, Shinagawa-ku, Tokyo (JP)
(74) Representative: Leppard, Andrew John

(57) **Abstract**

An image signal processing apparatus provided with a plurality of image signal output units for outputting image signals, an image signal combining unit for combining a plurality of image signals output from the plurality of image signal output units, and a phase synchronization signal generation unit for synchronizing with a first reference signal of a first image signal output from a first image signal output unit among the plurality of image signal output units the phase of another reference signal of another image signal output from another image signal output unit other than the first image signal output unit so as to generate a signal, wherein the first image signal output unit outputs the first image signal based on the first reference signal to the image signal combining unit, the other image signal output units output image signals using clock signals based on their own phase synchronized oscillation signals to the image signal combining unit, and the image signal combining unit combines the plurality of image signals output from the plurality of image signal output units.

## Description

The present invention relates to an image signal processing apparatus. The present invention further relates to a phase synchronization method of two image signals.

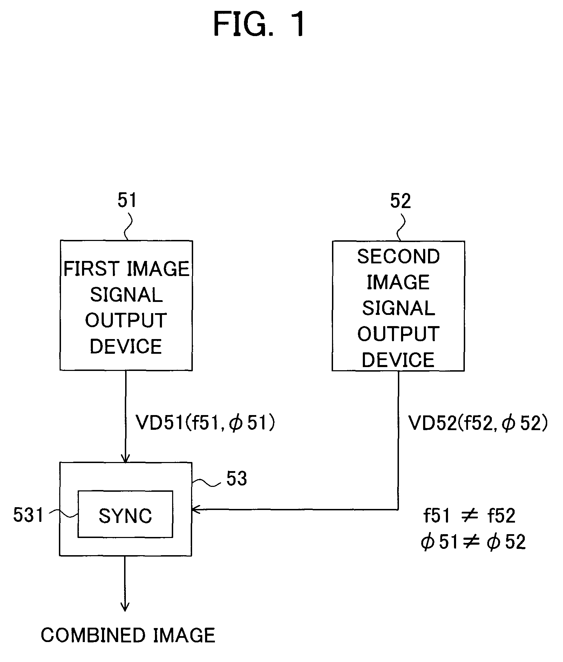

A recent practice has been to combine a plurality of image signals output from a plurality of image signal output devices by an image signal combining device and displaying them as a single image. As illustrated in FIG. 1, one such practice is to combine a first image signal (video playback signal) VD51 from a first image signal output device constituted by for example a television receiver or a video signal player and a second image signal (computer image signal) VD52 from a second image signal output device constituted by for example a computer for display as a single image. For combining such two images, the technique of using a frame synchronization device for absorbing a difference of frequencies and/or phases of the vertical synchronization signals of the two image signals or the technique of forcibly synchronizing image signals with each other is employed. However, such techniques suffer from the following disadvantages.

First, the disadvantage in the case where the clock frequencies for display of a plurality of image signals output from a plurality of image signal output devices differ from each other will be explained. In for example the first image signal output device constituted by the video signal player 51, the clock frequency dynamically fluctuates depending on the input signal. Therefore, the clock frequency f51 of the first image signal (video playback signal) VD51 fluctuates. On the other hand, the second image signal VD52 is output by using a display use clock f52 for computer signal processing in for example the second image signal output device constituted by the computer 52. In this example, these display use clock frequencies f51 and f52 of the two image signals are different. Also, the phases φ51 and φ52 of the clocks do not match.

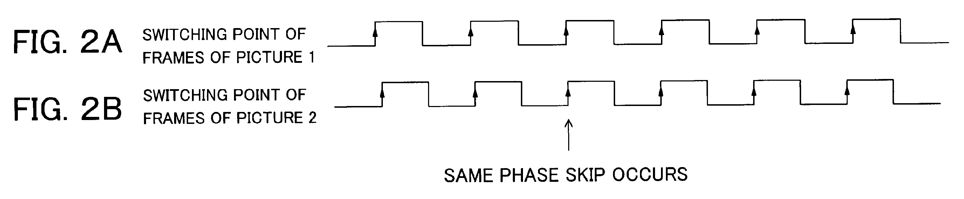

When providing a frame synchronization device 531 for combining two pictures by the two image signals V51 and V52 in the image signal combining device 53, if the frame synchronization device 531 fetches the second image signal (computer image signal) VD52 in units of for example frames or units of vertical synchronization signals by using for example the first image signal (video playback signal) VD51 as a reference, for example as illustrated in FIGS. 2A and 2B, at the point of time when the two image signals switch in the same phase, namely, at the boundaries of frames, the processing timing of other image signal will not match and will deviate in terms of time, the other image will sometimes be skipped (frame skipping), or the same image will sometimes repeat in a "repeat (frame overlapping)" phenomenon.

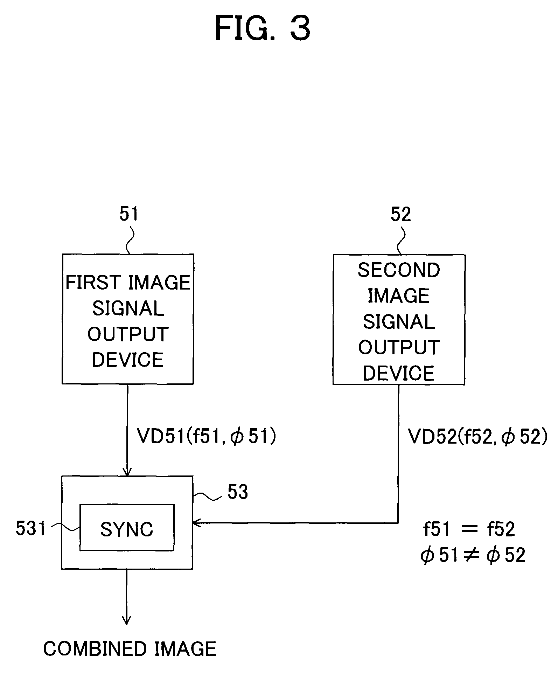

Next, the disadvantage in a case where the display use clock frequencies of a plurality of image signals output from a plurality of image signal output devices are the same, but the phases of the clocks do not match will be explained. As illustrated in FIG. 3, the first image signal output device 51 is for example a TV receiver, and the second image signal output device 52 is for example a computer which outputs the second image signal (computer image signal) VD52 by using a clock f51 having a frequency in synchronization with the first clock frequency f51. Assume that the frequencies f51 and f52 are equal and that the phases φ51 and φ52 are not synchronized between these two image signals.

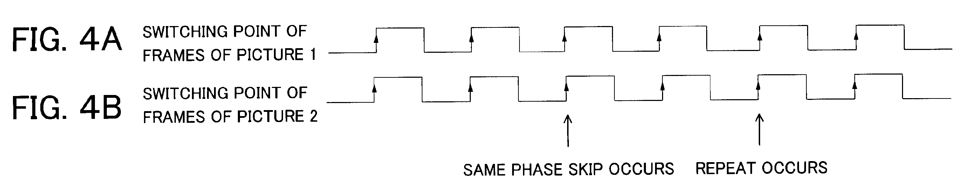

In this case, even when providing the frame synchronization device 53 in the image signal combining device 53, at which phase relationship the vertical synchronization signals of the two image signals stop will be uncertain. Depending on the case, in the processing in the frame synchronization device 531, as illustrated in for example FIGS. 4A and 4B, the vertical synchronization signals may be converged to a position near a phase boundary, that is, a location where they most should not be converged. As a result, the phenomenon of the processing timing of the other image signal not matching but being deviated in terms of time at the boundary of frames and the other image being skipped or repeating will sometimes occurs. Further, when the phase of the vertical synchronization signal of the first image signal deviates due to jitter (phase deviation) etc. of a time axis, the image will sometimes being skipped or repeat.

Further, the case of applying forced synchronization will be explained. When applying forced synchronization, the deviation of the phase can be eliminated at that time, but thereafter, for example, when the frames of the input video signal of the TV receiver 51 change due to switching the channel of the TV receiver 51 of FIG. 1 or FIG. 3 or switching the input signal, it is necessary to forcibly apply the synchronization each time. When applying such forced synchronization, as illustrated in FIGS. 5A and 5B, the timing per se of the imaging is forcibly reset, therefore the combined picture largely jumps or noise is generated in a certain case.

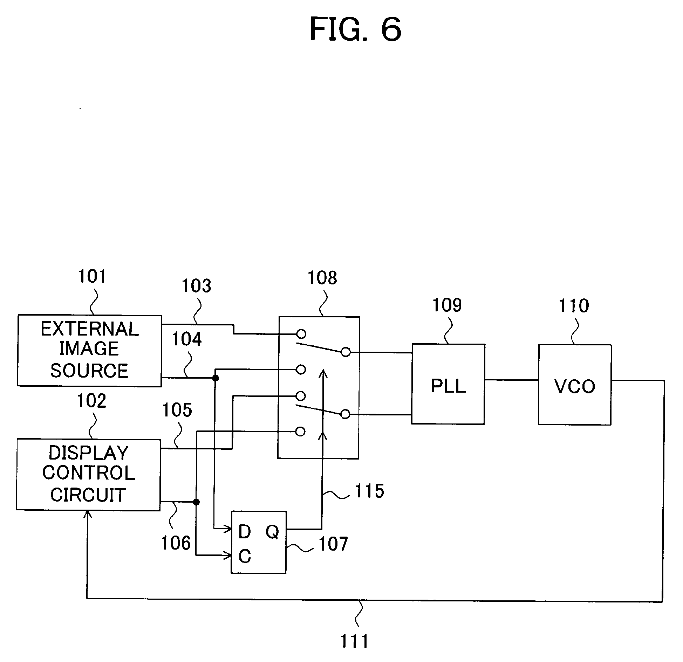

As explained above, in the above image signal processing apparatus, a high quality combined image could not easily be obtained. Such difficulties can be overcome for example by the circuit configuration shown in FIG. 6 known from Japanese Unexamined Patent Publication (Kokai) No. 5-188902. The technology disclosed in Japanese Unexamined Patent Publication (Kokai) No. 5-188902 will be explained in brief by referring to FIG. 6. A D-type flip-flop circuit 107 receives as input at a data terminal D an external vertical synchronization signal 104 included in an external image signal output from an external image source 101 like for example a television receiver and at a clock terminal C an internal vertical synchronization signal 106 included in an internal image signal output from a display control circuit 102 like for example a computer and outputs a pulse signal in accordance with the phase difference between the external vertical synchronization signal 104 and the internal vertical synchronization signal 106 from a Q terminal. Here, the D-type flip-flop circuit 107 detects the phase difference between the external vertical synchronization signal 104 and the internal vertical synchronization signal 106. A selector 108 switches between an external horizontal synchronization signal 103 and the external vertical synchronization signal 104 and between an internal horizontal synchronization signal 105 and the internal vertical synchronization signal 106 in accordance with the phase difference of the two detected vertical synchronization signals.

Usually, in an initial state, the phase difference of the two vertical synchronization signals is large, and the synchronization signals which are switched at the selector 108 first and output are the external vertical synchronization signal 104 and the internal vertical synchronization signal 106. These two vertical synchronization signals are input to a phase-locked loop (PLL) circuit 109. The PLL 109 detects the phase difference of the two input vertical synchronization signals. A voltage-controlled oscillator (VCO) 110 oscillates at a frequency based on the voltage in accordance with the detected phase difference and outputs a frequency signal 111 thereof to the display control circuit 102. The display control circuit 102 performs image processing based on the frequency signal 111 output from the VCO 110 and generates internal image signals. As a result, the internal horizontal synchronization signal 105 and the internal vertical synchronization signal 106 are output.

When the phase difference of the two vertical synchronization signals becomes small, the synchronization signals switched at the selector 108 become the external horizontal synchronization signal 103 and the internal horizontal synchronization signal 105. These two horizontal synchronization signals are input to the PLL 109. The PLL 109 detects the phase difference of the two input horizontal synchronization signals. The VCO 110 oscillates at a frequency based on the voltage in accordance with the phase difference therebetween and outputs the frequency signal 111 thereof to the display control circuit 102. The display control circuit 102 performs the image processing based on the frequency signal 111 output from the VCO 110 and generates the internal image signals. As a result, the internal horizontal synchronization signal 105 and the internal vertical synchronization signal 106 are output.

The circuit shown in FIG. 6 generates the frequency signal 111 used in a computer or other display circuit 105 matched with the phase of the vertical synchronization signal of a television receiver or other external image source 101 at first as explained above, then generates the frequency signal 111 used in the display control circuit 105 matched with the phase of the horizontal synchronization signal of the external image source 101. In order to generate a frequency signal 111 enabling accurate phase synchronization in accordance with such a phase difference, use is made of a PLL and VCO.

Summarizing, in the circuit illustrated in FIG. 6, when the phase difference between the vertical synchronization signal of the external image source 101 and the vertical synchronization signal of the display control circuit 105 is large or when the fluctuation of the input frequency of the external image source 101 is large, a long time is sometimes taken for phase synchronization of the two vertical synchronization signals. For this reason, a long time is sometimes taken until a correctly combined image is obtained at the image signal combining device (not shown).

The circuit illustrated in FIG. 6 controls the system to eliminate the phase difference of the two vertical synchronization signals, then controls the system to eliminate the phase difference of the two horizontal synchronization signals. However, the frequency of the vertical synchronization signal and the frequency of the horizontal synchronization signal differ by two to three orders of magnitude. When using one usual PLL circuit for generating phase-synchronized signals for signals having different frequencies in this way, the trackability at the time of switching becomes an issue. For example, when switching from a vertical synchronization signal to a horizontal synchronization signal, the device for combining the image cannot quickly keep up with such switching, so a few lines' worth of the combined image immediately after switching cannot be correctly obtained in certain cases. Especially, when switching to a phase comparison state for comparing phases of two horizontal synchronization signals and then the phase of any vertical synchronization signal changes by one cycle or more worth of change, the phases of the vertical synchronization signals will become offset from each other in units of cycles of the horizontal synchronization signals as they are unless the two vertical synchronization signals are switched to the phase comparison state again. Such a phase change of vertical synchronization signals may frequently occur in the image signal of an actual television receiver or the playback signal of a video signal player etc.

When a distance between the first image signal output device 11 and the second image signal output device 12 is for example a few meters to several tens of meters, noise is superimposed on the signal path between these devices, a signal delay occurs in the high frequency image signal, or a difference of reference potential occurs based on the difference of the ground (GND) potential in many cases. The technique illustrated in FIG. 6 does not offer any countermeasure against such an influence of noise, signal delay, or difference of the reference potential. When using the circuit of FIG. 6 in the above situation, the display control circuit 102 is influenced by the external image source 101 or noise or influenced by the signal delay, and the image combining operation becomes unstable.

The frame synchronization devices explained by referring to FIG. 1 and FIG. 3 synchronize the frames of two image signals by referring to the vertical synchronization signals. Therefore, when using the phase synchronized horizontal synchronization signals in the circuit of FIG. 6, the usual frame synchronization device cannot be used. Accordingly, the technology of the circuit illustrated in FIG. 6 requires that switching be frequently performed in accordance with the state of the phase synchronization. From such a viewpoint, actually it is difficult to apply to a circuit providing a frame synchronization device in an image signal combining device.

It is therefore desirable to provide an image signal processing apparatus for combining a plurality of images output from a plurality of image signal output devices which is able to correctly combine images even when the image signal output devices are separately located and which does not cause skipping, repeating, and other phenomenon lowering the image quality and to provide a phase synchronization method for this purpose.

According to a first aspect of the present invention, there is provided an image signal processing apparatus including a plurality of image signal output units for outputting image signals, an image signal combining unit for combining a plurality of image signals output from the plurality of image signal output units, and a phase synchronization signal generation unit for synchronizing with a first reference signal of a first image signal output from a first image signal output unit among the plurality of image signal output units the phase of another reference signal of another image signal output from another image signal output unit other than the first image signal output unit so as to generate a signal, wherein the first image signal output unit outputs the first image signal based on the first reference signal to the image signal combining unit, the other image signal output units output image signals using clock signals based on their own phase synchronized oscillation signals to the image signal combining unit, and the image signal combining unit combines the plurality of image signals output from the plurality of image signal output units.

Preferably, the synchronization signal generation unit has a phase comparison circuit for calculating a phase difference between the first reference signal of the first image signal and the other reference signal, a filter circuit for passing a low frequency component of the calculated phase difference signal therethrough and determining a synchronization characteristic and a response characteristic of the synchronization signal generation circuit, and a voltage-controlled oscillation circuit for generating an oscillation signal having an oscillation frequency corresponding to the voltage of the low frequency component of the phase difference output from the filter circuit, the oscillation signal of the voltage-controlled oscillator is input to a corresponding other image signal processing unit, a corresponding image signal is generated in accordance with the input oscillation signal and output to the image signal combining unit, and the reference signal of the generated image signal is fed back as the other input signal of the phase comparison circuit.

More preferably, the phase comparison circuit and the filter circuit form a circuit having large DC gains for reducing the steady phase error.

Preferably, the phase comparison circuit and the filter circuit are arranged in the vicinity of the first image signal output unit, and the voltage-controlled oscillation circuit is arranged in the vicinity of the relevant image signal output unit.

More preferably, a voltage to current conversion circuit for converting the voltage of a low frequency component of the phase difference to a current and outputting the converted current, is provided at a stage following to the filter circuit, or a voltage to current conversion circuit for converting the voltage of a low frequency component of the phase difference to a current and outputting the converted current is provided at an output stage in the filter circuit, and a current to voltage conversion circuit for converting the current output from the voltage to current conversion circuit to voltage is provided, at a stage preceding to the voltage-controlled oscillation circuit and at a stage following to the voltage to current conversion circuit or at an input stage of the voltage-controlled oscillation circuit.

According to a second aspect of the present invention, there is provided an image signal processing apparatus for synchronizing with a first image signal output from a first image signal output unit the phase of another image signal output from another image signal output unit to be combined with the first image signal, including a phase synchronization signal generation circuit for generating a phase difference signal between a first reference signal included in the first image signal and another reference signal included in the other image signal for synchronizing with the first reference signal the phase of the other reference signal and for supplying a display use clock signal having a frequency in accordance with the level of the phase difference signal to the other image signal output unit, the other image signal output unit outputting the other image signal based on the display use clock signal from the phase synchronization signal generation circuit.

According to a third aspect of the present invention, there is provided a method for synchronizing with a first image signal including a first reference signal output from a first image signal output unit the phase of another image signal to be combined with the first image signal and generated based on a display use clock in another image signal output unit, including generating a phase difference signal between a first reference signal included in the first image signal and another reference signal included in the other image signal for synchronizing with the first reference signal the phase of the other reference signal and generating a display use clock signal having a frequency in accordance with the level of the phase difference signal.

According to embodiments of the present invention, when combining two or more images having different clock frequencies and/or phases, the images can be correctly combined without lowering the image quality due to skipping, repeating, etc. Further, according to embodiments of the present invention, even when the plurality of image signal output devices are separately located from each other and there are the effects of noise, a difference of potentials, and signal delay, two or more images having different clock frequencies and/or phases can be correctly combined without being affected by them.

Further, according to embodiments of the present invention, the phase synchronization of two reference signals can be correctly and quickly carried out.

Embodiments particularly relate to an image signal processing apparatus for bringing phases of synchronization signals of a plurality of image signal into coincidence with a predetermined phase so as to correctly combine a plurality of images when combining a plurality of image signals output from a plurality of separately located image signal output devices.

Further particular and preferred aspects of the present invention are set out in the accompanying independent and dependent claims. Features of the dependent claims may be combined with features of the independent claims as appropriate, and in combinations other than those explicitly set out in the claims.

The present invention will be described further, by way of example only, with reference to preferred embodiments thereof as illustrated in the accompanying drawings, in which:
FIG. 1 is a view of the configuration of an image signal processing apparatus;
FIGS. 2A and 2B are operation timing diagrams of the image signal processing apparatus illustrated in FIG. 1;
FIG. 3 is a view of the configuration of another image signal processing apparatus;
FIGS. 4A and 4B are operation timing diagrams of the image signal processing apparatus illustrated in FIG. 3;

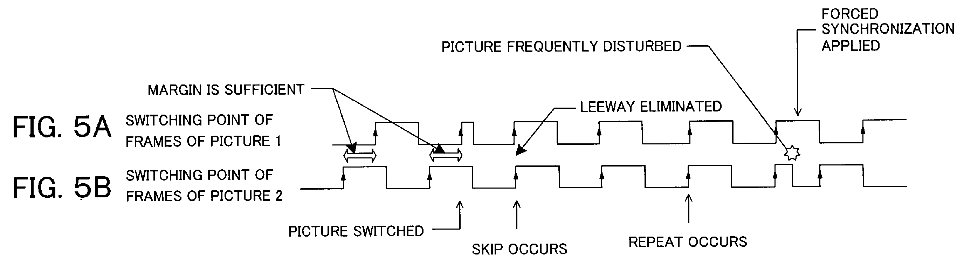

FIGS. 5A and 5B are operation timing diagrams of still another image signal processing apparatus;
FIG. 6 is a view of the configuration of the other image signal processing apparatus;

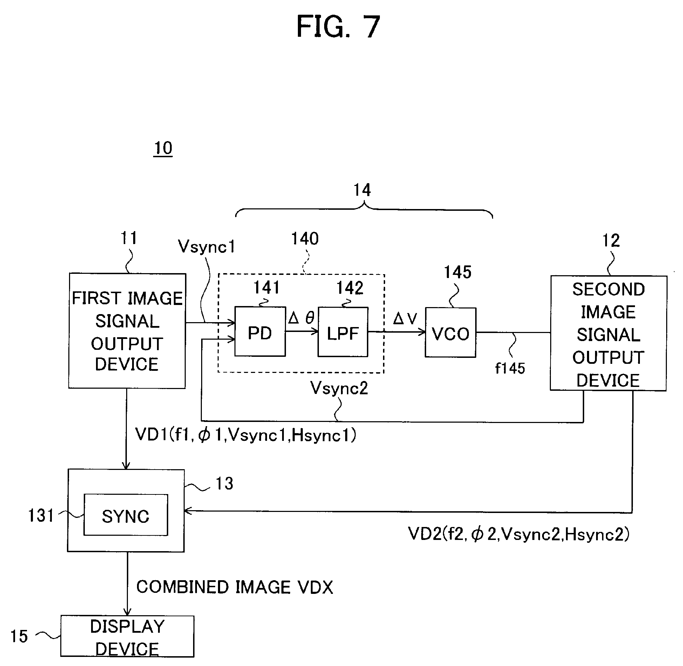

FIG. 7 is a view of the configuration of an image signal processing apparatus of a first embodiment of the present invention;

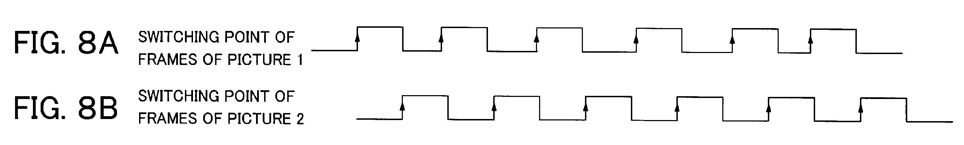

FIGS. 8A and 8B are timing diagrams of signals of the image signal processing apparatus illustrated in FIG. 7;

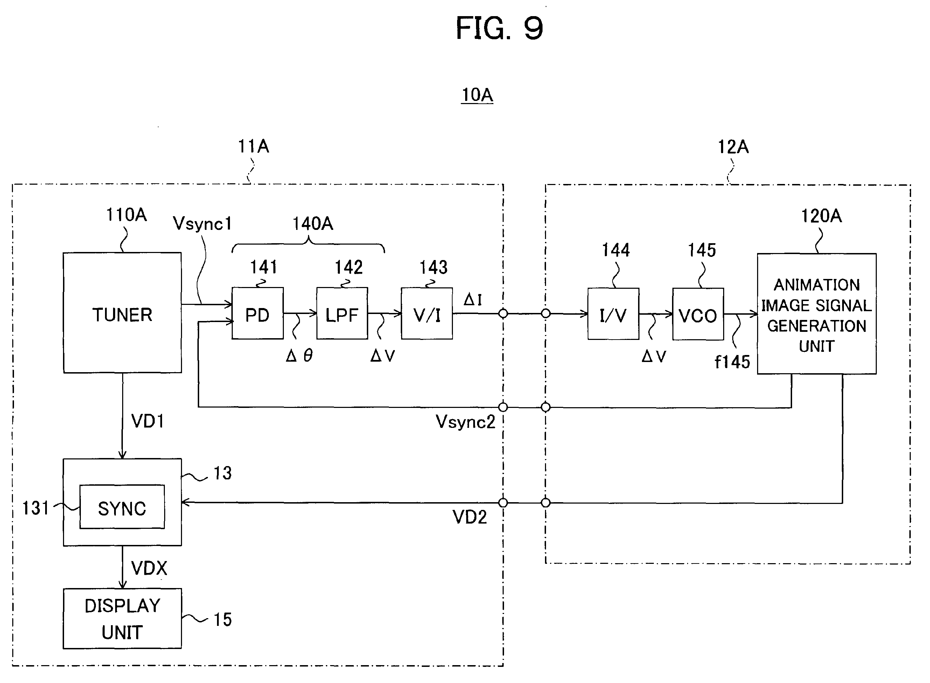

FIG. 9 is a view of the configuration of an image signal processing apparatus of a second embodiment of the present invention;

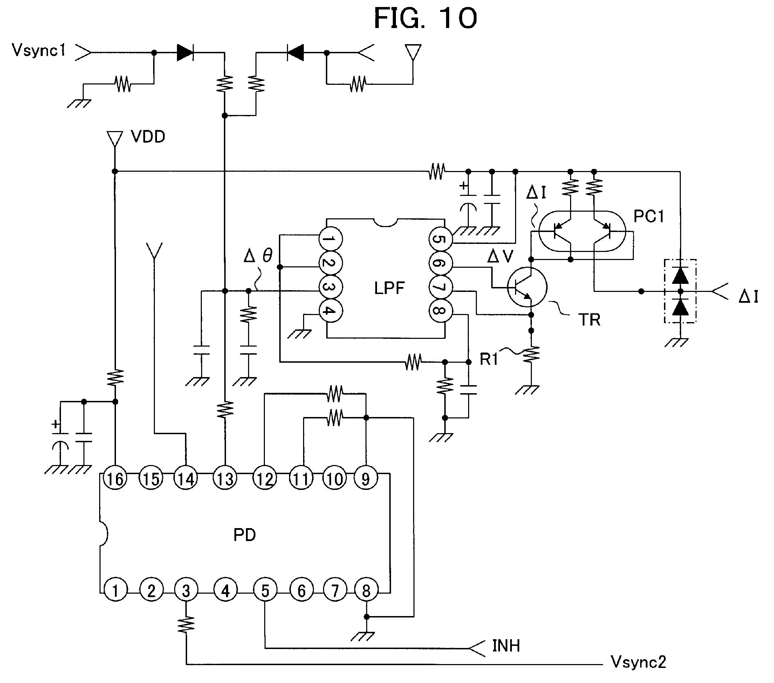

FIG. 10 is a view of the configuration of a partial detailed circuit of the image signal processing apparatus of the second embodiment of the present invention illustrated in FIG. 9;

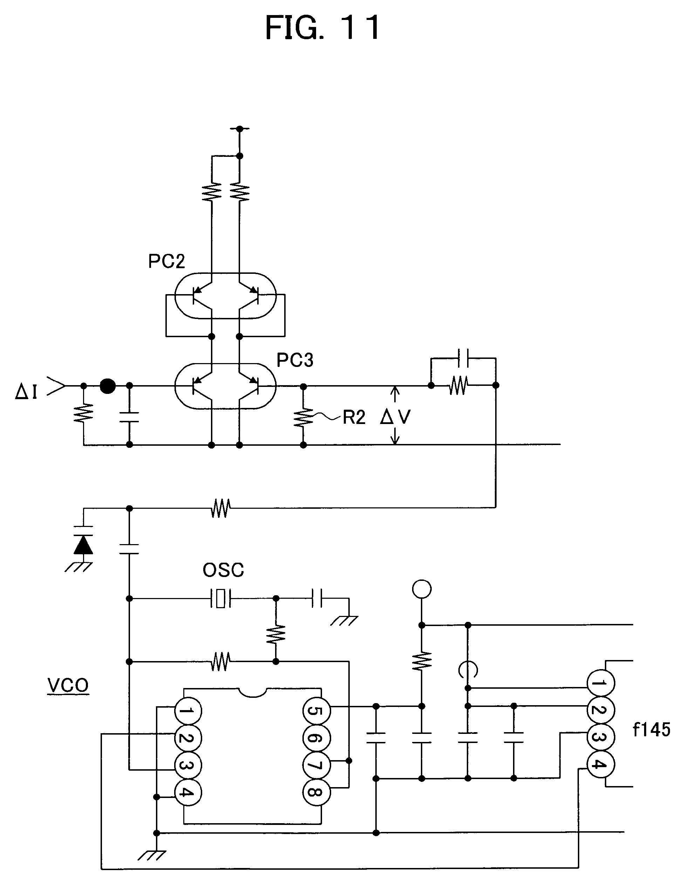

FIG. 11 is a view of the configuration of a partial detailed circuit of the image signal processing apparatus of the second embodiment of the present invention illustrated in FIG. 9; and

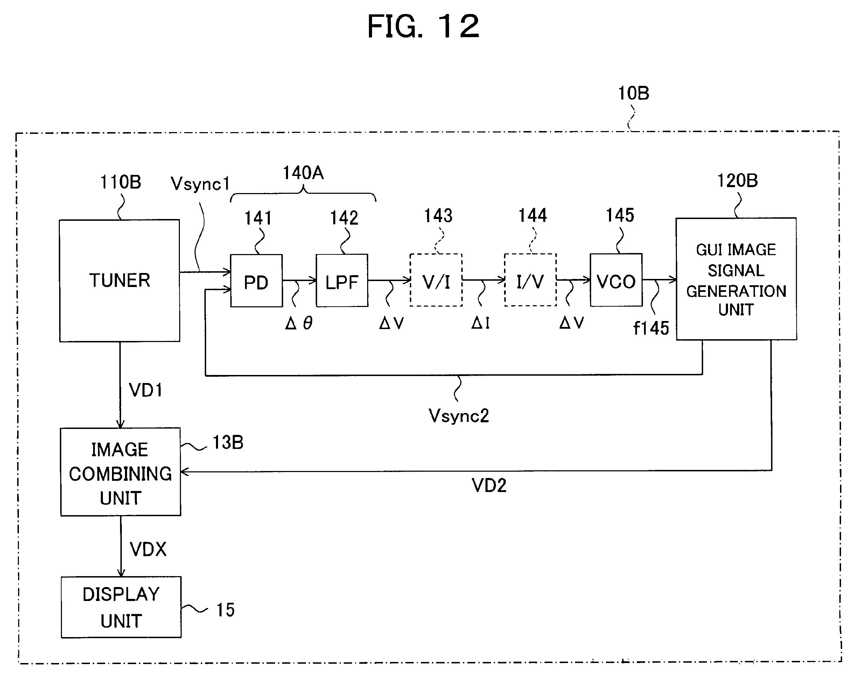

FIG. 12 is a view of the configuration of an image signal processing apparatus of a third embodiment of the present invention.

Preferred embodiments of the image signal processing apparatus of the present invention will be described in detail below while referring to the attached figures.

In the following description of the embodiments, for simplifying the illustration and explanation, a case where two image signals output from two image signal output devices are combined will be explained.

### First Embodiment

An image signal processing apparatus of a first embodiment of the present invention will be explained first by referring to FIG. 7 to FIG. 8.

An image signal processing apparatus 10 of the first embodiment of the present invention illustrated in FIG. 7 has a first image signal output device 11, second image signal output device 12, image signal combining device 13, synchronization signal generation circuit (PLL: Phase-Locked Loop) 14, and display device 15.

The first image signal output device 11 is for example a television signal receiver, and the first image signal VD1 output from the first image signal output device 11 is for example a television picture signal.

The second image signal output device 12 includes for example a graphic image generation computer, and the second image signal VD2 output from the second image signal output device 12 is for example a computer graphic image signal after moving picture processing such as GUI (Graphic User's Interface).

The image signal combining device 13 combines the first image signal VD1 output from the first image signal output device 11 and the second image signal VD2 output from the second image signal output device 12 and displays for example a combined image DVX on the display device 15.

The synchronization signal generation circuit 14 has a phase comparison unit 140 and voltage-controlled oscillator (VCO) 145. The phase comparison unit 140 has a phase comparison circuit (PD) 141 and low pass filter circuit or loop filter circuit (LPF) 142.

Preferably, the phase comparison unit 140 is configured by a phase comparison circuit 141 having a high DC gain and the filter circuit 142 in order to minimize the steady phase error. Specifically, it is given a configuration integrating all information of the phase difference by the filter circuit 142 in the back as time information of (current x phase difference) at a charge pump in the phase comparison circuit 141. In that case, as the filter circuit 142, a primary lead/lag type low pass filter circuit can be formed. Preferably, the filter circuit 142 is given a circuit configuration not including a resistor component. Specifically, for example, the filter circuit 142 is given a configuration using only an operation amplifier circuit and a capacitor as an input impedance of the operation amplifier circuit and using only a capacitor as a load feedback impedance of the operation amplifier circuit. In this way, when a resistor is not used in the filter circuit 142, current is not leaked, and integration can be completely carried out. This will be referred to as a complete integration type filter circuit 142.

In the present specification, the circuit configuration using the phase comparison circuit 141 having a high DC gain explained above and the filter circuit 142 for completely integrating the phase difference and/or the phase comparison unit using a complete integration type filter circuit 142 not having a resistor component will be referred to as the "complete integration type phase comparison unit 140". Below, the case of using the complete integration type phase comparison unit 140 will be explained.

More preferably, the image signal combining device 13 is provided with a frame synchronization device 131 explained in detail later.

The layout of the synchronization signal generation circuit 14 will be explained next. It is possible to integrally form the above complete integration type phase comparison unit 140 and the VCO 145, but in the present embodiment, an example of a configuration wherein the complete integration type phase comparison unit 140 and the VCO 145 are separated is shown. The reasons for that will be explained next.

As a first reason, it is difficult in production technology to integrally produce for example the complete integration type phase comparison unit 140 configured by the phase comparison circuit 141 operating at a low frequency of about 60 Hz and the LPF 142 and for example the VCO 145 for generating a signal oscillating at a high frequency of about 54 MHz. Further, separating the circuits for low speed operation and the circuits for high speed operation is preferable from the viewpoint of commercialization and application. Especially, the high frequency signal f145 generated at the VCO 145 is used in the second image signal output device 12. Therefore, from the viewpoint of noise resistance, prevention of signal delay, and countermeasures against potential difference, desirably the VCO 145 is arranged in the vicinity of the second image signal output device 12. The complete integration type phase comparison unit 140 is desirably placed in the vicinity of the first image signal output device 11 for generating the first vertical synchronization signal Vsync1 serving as the reference for the phase synchronization and of the image signal combining device 13 located in the vicinity of the first image signal output device 11.

The second reason will be explained next. When the first image signal output device 11 and the second image signal output device 12 are separately located, desirably the influence of the noise is reduced, adverse influence due to the signal delay is eliminated, and the problem of the potential difference based on the potential difference between the first image signal output device 11 and the second image signal output device 12 is reduced as much as possible. In that sense, the VCO 145 for generating a high frequency signal f145 of for example about 54 MHz used in the second image signal output device 12 is desirably arranged in the vicinity of the second image signal output device 12. On the other hand, the complete integration type phase comparison unit 140 may be arranged in the vicinity of the first image signal output device 11 or may be arranged in the vicinity of the second image signal output device 12, but when for example the first image signal output device 11 and the image signal combining device 13 are close, preferably the complete integration type phase comparison unit 140 is arranged in the vicinity of the first image signal output device 11 outputting the first vertical synchronization signal Vsync1 serving as the reference of the phase synchronization.

Especially, when combining a plurality of image signals output from a plurality of image signal output devices, the synchronization signal serving as the reference of the phase synchronization, for example, the vertical synchronization signal, is synchronized in phase with the vertical synchronization signal output from one image signal output device, for example, the first image signal output device 11, and serves as the reference of the vertical synchronization signal of the other image signal. Therefore, the complete integration type phase comparison unit 140 is arranged in the vicinity of the first image signal output device 11.

The first image signal VD1 is for example a digital image signal and includes a display use clock having a first frequency f1 and a first phase φ1, a first vertical synchronization signal Vsync1, and a first horizontal synchronization signal Hsync1. In the same way, the second image signal VD2 is for example a digital image signal and includes a display use clock having a second frequency f2 and a second phase φ2, a second vertical synchronization signal Vsync2, and a second horizontal synchronization signal Hsync2. As explained above, in the present embodiment, the synchronization signal generation circuit 14 makes the second clock frequency f2 equal to the first clock frequency f1. That is, the second vertical synchronization signal Vsync2 is matched with the frequency of the first vertical synchronization signal Vsync1 and synchronized in phase. More preferably, the second horizontal synchronization signal Hsync2 is also made equal to the first horizontal synchronization signal Hsync1 in both of the frequency and phase.

As the reference synchronization signal for phase synchronization, in the present embodiment, the phase synchronization between the first vertical synchronization signal Vsunc1 and the second vertical synchronization signal Vsync2 will be explained. The synchronization signal generation circuit 14 operates so that a phase difference Δφ between the first vertical synchronization signal Vsync1 of the first image signal VD1 and the second vertical synchronization signal Vsync2 of the second image signal VD2 becomes 0. When the phase comparison circuit 141 receives as input the first vertical synchronization signal Vsync1 of the first image signal VD1 from the first image signal output device 11 and the second vertical synchronization signal Vsync2 of the second image signal VD2 from the second image signal output device 12, the phase comparison circuit 141 performs for example multiplication processing or subtraction processing on the first vertical synchronization signal Vsync1 and the second vertical synchronization signal Vsync2, calculates the phase difference Δφ of the two, and outputs a phase difference voltage signal Δθ indicating the phase difference Δφ to the LPF 142.

The LPF 142 is a loop filter (or low pass filter) which eliminates the high frequency component etc. generated by the multiplication processing or the like in the phase comparison circuit 141 included in the phase difference voltage signal Δθ by outputs the phase difference voltage ΔV obtained by passing just the low frequency component (eliminating the high frequency component) in the phase difference voltage signal Δθ and, at the same time, determines the synchronization characteristic and the response characteristic of the PLL. The phase difference voltage ΔV passed through the LPF 142 is supplied to the VCO 145.

The VCO 145 is the oscillation circuit oscillating at an oscillation frequency in accordance with the phase difference voltage ΔV, generates the frequency signal f145 having the oscillation frequency, and supplies the same to the second image signal output device 12.

The second image signal output device 12 counts down the frequency signal f145 generated at the VCO 145 to generate a clock having the second frequency f2 for generating the second image signal VD2, generates a second vertical synchronization signal Vsync2 and a second horizontal synchronization signal Hsync2 by using the generated second clock frequency f2 and outputs the same to the image signal combining device 13 and, at the same time, feeds back the second vertical synchronization signal Vsync2 to the phase comparison circuit 141. Note that, in contrast to the fact that the frequency of the first vertical synchronization signal Vsync1 of the first image signal VD1 and the frequency of the second vertical synchronization signal Vsync2 of the second image signal VD2 are for example about 60 Hz, the frequency signal f145 output from the VCO 145 is for example 54 MHz, therefore, for example, the second image signal output device 12 divides the frequency signal f145 and generates the second vertical synchronization signal Vsync2.

By repeating the operation of the closed loop circuit configured by the phase comparison circuit 141, LPF 142, VCO 145, and the second image signal output device 12, the second vertical synchronization signal Vsync2 synchronized in phase with the first vertical synchronization signal Vsync1 of the first image signal VD1 output from the first image signal output device 11 is generated.

As described above, the first vertical synchronization signal Vsync1 and the second vertical synchronization signal Vsync2 are synchronized in phase, therefore, when the first image signal VD1 output from the first image signal output device 11 and the second image signal VD2 output from the second image signal output device 12 are combined at the image signal combining device 13, the first image signal VD1 and the second image signal VD2 can be combined in a frame-synchronized state.

When using the complete integration type phase comparison unit having a high DC gain as the phase comparison unit 140, the phase difference between the first vertical synchronization signal Vsync1 and the second vertical synchronization signal Vsync2 can be completely made 0. As a result, it becomes possible to generate the second vertical synchronization signal Vsync2 synchronized in phase with the first vertical synchronization signal Vsync1. Further, as a result, the first image signal VD1 based on the first vertical synchronization signal Vsync1 and the second image signal VD2 based on the second vertical synchronization signal Vsync2 completely coincide in phase and the combination of the two image signals becomes correct in the image signal combining device 13.

Preferably, the image signal combining device 13 has a frame synchronization device 131. The frame synchronization device 131 has a not illustrated frame memory, inputs the first image signal VD1 to the frame memory based on the first vertical synchronization signal Vsync1, and inputs the second image signal VD2 to the frame memory based on the second vertical synchronization signal Vsync2. The frame synchronization device 131 combines the first image signal VD1 and the second image signal VD2 fetched into the frame memory in this way.

Namely, the first image signal VD1 input to the frame memory using the first vertical synchronization signal Vsync1 as a reference and the second image signal VD2 input to the frame memory using the second vertical synchronization signal Vsync2 as a reference are stored in the frame memory in a state synchronized using the first vertical synchronization signal Vsync1 and the second vertical synchronization signal Vsync2 as references. Accordingly, these first image signal VD1 and the second image signal VD2 stored in the frame memory can be combined in the frame- and phase-synchronized state.

In this way, by synchronizing the first vertical synchronization signal Vsync1 and the second vertical synchronization signal Vsync2 in phase at the synchronization signal generation circuit 14, the advantage that the frames are synchronized using the frame synchronization device 131 becomes more effective. Especially, when using the frame synchronization device 131, even when jitter (phase deviation) occurs in the first vertical synchronization signal Vsync1 and/or the second vertical synchronization signal Vsync2, such jitter can be absorbed by the frame memory, therefore the effect of embodiments of the present invention is further raised.

When combining images in the image signal combining device 13, the phases at a switching point of pictures of two images are offset. Preferably, as illustrated in FIGS. 8A and 8B, when they are shifted by 180 degrees (inverted), the image combination operation in the image signal combining device 13 becomes more reliable. For example, if the phases of the first vertical synchronization signal Vsync1 and the second vertical synchronization signal Vsync2 are shifted by 180 degrees, when the first image signal VD1 is written into the frame memory of the frame synchronization device 131, the write operation of the second image signal VD2 into the frame memory is not carried out, while when the second image signal VD2 is written into the frame memory of the frame synchronization device 131, the write operation of the first image signal VD1 into the frame memory is not carried out. Accordingly, the write operation of the first image signal VD1 and the second image signal VD2 with respect to one frame memory is reliably carried out by utilizing the time lag based on the phase difference.

There are two methods for shifting the switching point of pictures. The first method is the method of adjusting the way of application of phase synchronization by the synchronization signal generation circuit 14. For example, as illustrated in FIGS. 8A and 8B, the second vertical synchronization signal Vsync2 is synchronized in phase with respect to the first vertical synchronization signal Vsync1 in the state where the phases are shifted by 180 degrees. Naturally the first vertical synchronization signal Vsync1 and the second vertical synchronization signal Vsync2 have the same frequency and basically the two are synchronized in phase, but the phase of the second vertical synchronization signal Vsync2 is shifted from the first vertical synchronization signal Vsync1, preferably offset by 180 degrees, so that the write timings of the first image signal VD1 and the second image signal VD2 into the frame memory in the image signal combining device 13 do not overlap. According to a second method, in the synchronization signal generation circuit 14, the phases of the first vertical synchronization signal Vsync1 and the second vertical synchronization signal Vsync2 are matched. The phase of the second vertical synchronization signal Vsync2 when output from the second image signal output device 12 to the image signal combining device 13 may also be shifted by 180 degrees with respect to the first vertical synchronization signal Vsync1 in the second image signal output device 12.

In this way, according to the present embodiment, the phase at the time of switching of pictures can be controlled to a position where the skipping and/or repeating do not occur, preferably a position having a phase separate by 180 degrees where the repeating and skipping are hardest to occur. As a result, even when jitter etc. occurs in the vertical synchronization signal due to the fluctuation of the input frequency of the input first image signal VD1 of a graphic image generation computer or other first image signal output device 11, the time axis jitter can be absorbed in the place where there is the largest leeway. Further, even in a case where the first image signal VD1 is switched, the phases can be quickly synchronized in a place where there is leeway in the phase. In this way, according to the first embodiment of the present invention, it becomes possible to smoothly pull the phase to a stable operable phase, and the problem of skipping and/or repeating does not occur.

As the phase comparison frequency of the phase comparison circuit 141, the frequency of the second vertical synchronization signal Vsync2 is for example 60 Hz. On the other hand, the frequency of the first vertical synchronization signal Vsync1 is for example 59.94 Hz. Therefore, the frequency of the second vertical synchronization signal Vsync2 is made 59.94 Hz by phase synchronization processing. The frequency signal f145 generated at the VCO 145 is for example 54 MHz. In this way, the complete integration type phase comparison unit 140 will form a phase locked loop (PLL) for multiplying the frequency almost 1,000,000-fold (times). In such a PLL circuit having a large frequency difference, the use of a complete integration type low pass filter circuit or a loop filter circuit not including a resistor component as the filter circuit 142 is preferred also for achieving accuracy of the phase synchronization.

As explained above, according to the first embodiment of the present invention, when combining two or more images output from different two or more image signal output devices, the images can be correctly combined without a reduction in the image quality due to phenomena such as skipping and repeating. Namely, according to the first embodiment of the present invention, the disadvantages explained by referring to FIG. 1 to FIG. 5 can be overcome.

Further, when comparing this with the circuit explained by referring to FIG. 6, in the embodiment of the present invention, by just using the first vertical synchronization signal Vsync1 and the second vertical synchronization signal Vsync2 as the reference signals, as illustrated in FIG. 6, the reference signals are not switched for phase synchronization with the vertical synchronization signals, then for phase synchronization with the horizontal synchronization signals, therefore the signal processing is simple, and the synchronization pull-in operation is rapid, so no synchronization delay etc. accompanying the switching of the reference signal occurs.

The above embodiment explained the combination of the first image signal VD1 and the second image signal VD2 output from the two image signal output devices of the first image signal output device 11 and the second image signal output device 12 as the plurality of image signal output devices, but the present invention can also be applied to the case of more than two image signal output devices. In that case, the number of the reference image signal output devices using vertical synchronization signals as references for phase synchronization is set to one (or the number of reference image signals is set to one), and the vertical synchronization signal of the image signal of the other image signal output device is synchronized in phase with the reference vertical synchronization signal.

Further, in the above illustration, the first vertical synchronization signal Vsync1 was used as a reference signal, but the first horizontal synchronization signal Hsync1 can also be used. In that case, the phase synchronization circuit receives as input, in place of the first vertical synchronization signal Vsync1 and the second vertical synchronization signal Vsync2, the first horizontal synchronization signal Hsync1 and the second horizontal synchronization signal Hsync2.

Image combination with finer phase synchronization can be achieved when the first horizontal synchronization signal Hsync1 is used rather than the first vertical synchronization signal Vsync1. Note that the first horizontal synchronization signal Hsync1 has a higher frequency than the first vertical synchronization signal Vsync1, so it becomes difficult to realize the circuit configuration of the synchronization signal generation device 14. In that sense, preferably the complete integration type phase comparison circuit 140 explained in the present embodiment is employed for more correct phase synchronization.

If synchronizing the phase between the first horizontal synchronization signal Hsync1 and the second horizontal synchronization signal Hsync2, it can be estimated that the phase is also synchronized between the first vertical synchronization signal Vsync1 and the second vertical synchronization signal Vsync2. Accordingly, the frame synchronization device 131 in the image signal combining device 13 can apply frame synchronization based on the first vertical synchronization signal Vsync1 or the second vertical synchronization signal Vsync2 in the same way as the above description.

### Second Embodiment

An image signal processing apparatus 10A of a second embodiment of the present invention will be explained next by referring to FIG. 9.

There are many cases where a first image signal output device 11A and a second image signal output device 12A are located considerably far apart. Under such conditions, the first image signal output device 11A incorporates a tuner 110A outputting a first video signal, a complete integration type phase comparison unit 140A having a phase comparison circuit 141 and an LPF 142, a voltage to(/) current conversion circuit 143 for converting voltage to current, and a display unit 15 and the second image signal output device 12A incorporates a current to(/) voltage conversion circuit 144 for converting current to voltage, the VCO 145, and an animation image signal generation unit 145.

The animation image signal generation unit 145 generates an animation image signal for combination with the TV image signal output from the tuner 110A.

The complete integration type phase comparison unit 140A having the phase comparison circuit 141 and the LPF 142 shown in FIG. 9 is substantially the same as the complete integration type phase comparison unit 140 having the phase comparison circuit 141 and the LPF 142 shown in FIG. 7.

In FIG. 9, the distance between the complete integration type phase comparison unit 140A and the VCO 145 becomes long, noise is easily superimposed on the signal path between the LPF 142 and the VCO 145, and/or a signal delay occurs between them. Further, the potential difference of the ground potential occurs between the first image signal output device 11A and the second image signal output device 12A, a DC-like potential difference occurs, and the potential between the first clock frequency f1 and the second clock frequency f2 (or the potential between the first vertical synchronization signal Vsync1 and the second vertical synchronization signal Vsync2) fluctuates in certain cases. As a result, in the configuration shown in FIG. 9, there is a possibility that the first vertical synchronization signal Vsync1 and the second vertical synchronization signal Vsync2 cannot be correctly synchronized in phase, or fluctuation of the phase synchronization state will occur.

The image signal processing apparatus 10A of the second embodiment of the present invention overcomes such disadvantage. In the image signal processing apparatus 10A of the second embodiment illustrated in FIG. 9, the voltage/current conversion circuit 143 is added to an output stage of the LPF 142, and the current/voltage conversion circuit 144 is added to an input stage of the VCO 145. The voltage/current conversion circuit 143 is a circuit for converting voltage to current. The current/voltage conversion circuit 144 is a circuit for converting current to voltage. The voltage/current conversion circuit 143 positioned at a stage following to the LPF 142 has a very high output impedance, therefore no influence is exerted on it no matter what impedance circuit is connected at the back of the LPF 142. On the other hand, the current/voltage conversion circuit 144 positioned at a stage preceding to the VCO 145 has a very low input impedance, therefore no influence is exerted on it even when noise is superimposed on the signal path between the LPF 142 and the VCO 145. In addition, current is output from the voltage/current conversion circuit 143, therefore, even when a potential difference occurs between the first image signal output device 11A and the second image signal output device 12A, the information of the current from the first image signal output device 11A is reproduced in the ground potential of the second image signal output device 12A as it is, so almost no influence of the potential difference described above is exerted thereon. The VCO 145 has a high operation frequency, so there a concerns over spurious emission, but the current between the voltage/current conversion circuit 143 and the current/voltage conversion circuit 144 is substantially close to a direct current, so the concern over spurious emission is eliminated.

Note that it is possible to use the LPF equipped with a current output circuit configured by the LPF 142 and the voltage/current conversion circuit 143 formed integrally. Further, it is possible to use a VCO equipped with a current/voltage conversion circuit configured by the current/voltage conversion circuit 144 and the VCO 145 formed integrally.

FIG. 10 and FIG. 11 are detailed circuit diagrams of the second embodiment explained with reference to FIG. 9. In FIG. 10, the first vertical synchronization signal Vsync1 is input to a terminal 13 of a phase comparison circuit PD packaged in an IC circuit, the second vertical synchronization signal Vsync2 is input to a terminal 3, and a phase difference voltage signal Δθ showing the phase difference Δφ between the first vertical synchronization signal Vsync1 and the second vertical synchronization signal Vsync2 is output to the terminal 3 of the LPF packaged in the IC circuit from the terminal 13. The LPF passes the low frequency component of the phase difference voltage signal Δθ, and the phase difference voltage ΔV is output from a terminal 6 of the LPF to the base of a transistor TR. A phase difference current ΔI corresponding to the phase difference voltage ΔV flows through a resistor R1 connected between the emitter of the transistor TR and the ground potential. A circuit PC1 is a current mirror circuit in which the base and the emitter of one transistor are connected and this transistor functions as a diode, a current the same as that of the diode flows through the other transistor, and a current the same as the phase difference current ΔI flowing through the transistor TR, the resistor R1, and the diode flows from the other transistor to a node to which two diodes are connected in series. In this way, the transistor TR, the resistor R1, and the current mirror circuit PC1 configure the voltage/current conversion circuit 143.

A circuit PC3 in which two transistors of FIG. 11 are provided in parallel forms a differential pair circuit. A current the same as the phase difference current ΔI input to the gate of one transistor on the left side in the illustration flows through the other transistor on the right side in the illustration. The current flowing through the transistor on the right side flows through the resistor R2, and the voltage ΔV corresponding to the phase difference current ΔI is generated between terminals of the resistor R2. Accordingly, this circuit functions as the current/voltage conversion circuit 144. Note that, the circuit PC2 is provided with two transistors so as to configure a diode. The voltage ΔV generated in the resistor R2 is input to the VCO including a crystal oscillator OSC which oscillates at the oscillation frequency in accordance with the voltage ΔV generated in the resistor R2 to generate the frequency signal f145. The frequency signal f145 is input to the second image signal output device 12A.

As explained above, a current ΔI corresponding to the phase difference signal Δθ flows between the voltage/current conversion circuit 143 and the current/voltage conversion circuit 144, therefore the VCO 145 side is resistant to the influence of noise between the voltage/current conversion circuit 143 and the current/voltage conversion circuit 144. Further, it is resistant to the influence of potential fluctuation.

The case where a plurality of, i.e., more than two, image signal output devices are provided can be applied to the second embodiment of the present invention as well. Further, use can be made of the first horizontal synchronization signal Hsync1 in place of the first vertical synchronization signal Vsync1 as the reference signal.

As explained above, according to the second embodiment of the present invention, in addition to the effects of the first embodiment, two or more images output from two or more different image signal output devices can be correctly combined even in the case where a plurality of image signal output devices are separately located from each other and there is the possibility of the influence of noise therebetween or there is a difference of potentials among a plurality of image signal output devices and signal delay occurs.

### Third Embodiment

An image signal processing apparatus 10B of a third embodiment of the present invention will be explained next by referring to FIG. 12. The image signal processing apparatus 10B of the third embodiment of the present invention is comprised of a tuner 110B able to receive a television broadcast, a complete integration type phase comparison unit 140A configured by a phase comparison circuit 141 and an LPF 142, a VCO 145, a GUI (Graphic User's Interface) image signal generation unit 120B, an image signal combining unit 13B, and a display unit 15 formed integrally. The GUI image signal generation unit 120B generates a computer graphic image signal after moving picture processing such as GUI to be combined with the TV image output from the tuner 110A by for example a microprocessor. The image signal processing apparatus 10B is a TV receiver which superimposes and displays such a GUI image on an image obtained by receiving a television broadcast.

Alternatively, it is a personal computer mounting a tuner able to receive a television broadcast and a display unit.

In the image signal processing apparatus 10B, the first vertical synchronization signal Vsync1 included in the television image from the tuner 110B able to receive a television broadcast and the second vertical synchronization signal Vsync2 included in the GUI image generated at the GUI image signal generation unit 120B are synchronized in phase in the complete integration type phase comparison unit 140, and the phase-synchronized television image from the tuner 110A able to receive a television broadcast and the GUI image generated at the GUI image signal generation unit 120B are combined at the image signal combining unit 13. The image combined at the image signal combining unit 13 is displayed on the display unit 15.

The operations of the complete integration type phase comparison unit 140A and the VCO 145 are the same as those explained in the second embodiment.

In this way, in an image signal processing apparatus 10B of the third embodiment constituted by a TV receiver, since the distance between the tuner and the GUI image generation unit is becoming longer along with the increasingly large size of pictures of display units, the complete integration type phase comparison unit 140A, the VCO 145, the GUI image signal generation unit 120B, and the image signal combining unit 13 are installed in the tuner 110B able to receive a television broadcast. The phase-synchronized television image and the GUI image can thus be combined for display on the display unit 15.

### Modification of Third Embodiment

In an image signal processing apparatus 10B of the third embodiment constituted by a personal computer, the distance between the tuner 110A able to receive the television broadcast and the GUI image signal generation device 120B is short. Accordingly, the distance between the complete integration type phase comparison unit 140 and the VCO 145 and the GUI image signal generation device 120B is short. Accordingly, as explained in the second embodiment, there is only a low possibility of external noise being superimposed between the complete integration type phase comparison unit 140A and the VCO 145 due to a long distance between the tuner 110A able to receive the television broadcast and the GUI image signal generation device 120B. However, as explained above, when all of the circuits illustrated in FIG. 12 are integrally formed, there also exists a possibility of high frequency noise and/or crosstalk from the tuner 110A able to receive the television broadcast performing a high frequency operation and/or the GUI image signal generation device 120B.

In that case, the voltage/current conversion circuit 143 and the current/voltage conversion circuit 144 indicated by the broken lines in FIG. 14 can be provided. The effect is the same as that explained in the second embodiment.

Embodiments provide an image signal processing apparatus provided with a plurality of image signal output units for outputting image signals, an image signal combining unit for combining a plurality of image signals output from the plurality of image signal output units, and a phase synchronization signal generation unit for synchronizing with a first reference signal of a first image signal output from a first image signal output unit among the plurality of image signal output units the phase of another reference signal of another image signal output from another image signal output unit other than the first image signal output unit so as to generate a signal, wherein the first image signal output unit outputs the first image signal based on the first reference signal to the image signal combining unit, the other image signal output units output image signals using clock signals based on their own phase synchronized oscillation signals to the image signal combining unit, and the image signal combining unit combines the plurality of image signals output from the plurality of image signal output units.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An image signal processing apparatus comprising:
a plurality of image signal output units for outputting image signals,
an image signal combining unit for combining a plurality of image signals output from the plurality of image signal output units, and
a phase synchronization signal generation unit for synchronizing with a first reference signal of a first image signal output from a first image signal output unit among the plurality of image signal output units the phase of another reference signal of another image signal output from another image signal output unit other than the first image signal output unit so as to generate a signal,
the first image signal output unit outputting the first image signal based on the first reference signal to the image signal combining unit,
the other image signal output units outputting image signals using clock signals based on their own phase synchronized oscillation signals to the image signal combining unit, and
the image signal combining unit combining the plurality of image signals output from the plurality of image signal output units.

2. An image signal processing apparatus as set forth in claim 1, wherein the synchronization signal generation unit comprises:
a phase comparison circuit for calculating a phase difference between the first reference signal of the first image signal and the other reference signal,
a filter circuit for passing a low frequency component of the calculated phase difference signal therethrough and determining a synchronization characteristic and a response characteristic of the synchronization signal generation circuit, and
a voltage-controlled oscillation circuit for generating an oscillation signal having an oscillation frequency corresponding to the voltage of the low frequency component of the phase difference output from the filter circuit,
the oscillation signal of the voltage-controlled oscillator is input to a corresponding other image signal processing unit,
a corresponding image signal is generated in accordance with the input oscillation signal and output to the image signal combining unit, and
the reference signal of the generated image signal is fed back as the other input signal of the phase comparison circuit.

3. An image signal processing apparatus as set forth in claim 2, wherein the phase comparison circuit and the filter circuit form a circuit having large DC gains for reducing the steady phase error.

4. An image signal processing apparatus as set forth in claim 2 or 3, wherein
the phase comparison circuit and the filter circuit are arranged in the vicinity of the first image signal output unit, and
the voltage-controlled oscillation circuit is arranged in the vicinity of the corresponding image signal output unit.

5. An image signal processing apparatus as set forth in claim 4, wherein
a voltage to current conversion circuit for converting the voltage of a low frequency component of the phase difference to a current and outputting the converted current, is provided a stage following to the filter circuit, or the voltage to current conversion circuit for converting the voltage of a low frequency component of the phase difference to a current and outputting the converted current is provided at an output stage in the filter circuit, and
a current to voltage conversion circuit for converting the current output from the voltage to current conversion circuit to voltage is provided a stage preceding to the voltage-controlled oscillation circuit and a stage following to the voltage to current conversion circuit or at an input stage of the voltage-controlled oscillation circuit.

6. An image signal processing apparatus as set forth in any one of claims 1 to 5, wherein said first reference signal and other reference signal are vertical synchronization signals of said first image signal and other image signal.

7. An image signal processing apparatus as set forth in claim 6, wherein said image signal combining unit comprises a frame synchronization unit for performing frame synchronization based on said vertical synchronization signals for said plurality of image signals, and outputs the plurality of image signals which are synchronized.

8. An image signal processing apparatus as set forth in claim 7, wherein said other image signal output unit outputs to said image signal combining unit an image signal using a vertical synchronization signal shifted from said first vertical synchronization signal by a predetermined phase.

9. An image signal processing apparatus as set forth in claim 7, wherein
said synchronization signal generation unit operates so that a vertical synchronization signal shifted from said first vertical synchronization signal by a predetermined phase is generated, and
said other image signal output unit outputs to said image signal combining unit an image signal using said vertical synchronization signal shifted in phase.

10. An image signal processing apparatus as set forth in claim 1, wherein
said first image signal output unit includes a television signal receiver outputting a television picture as said first image signal, and
said other image signal output unit includes a graphic image generation unit for outputting a graphic image asynchronous with said television picture as one of the other image signals.

11. An image signal processing apparatus for synchronizing with a first image signal output from a first image signal output unit the phase of another image signal output from another image signal output unit to be combined with the first image signal, said apparatus comprising:
a phase synchronization signal generation circuit for generating a phase difference signal between a first reference signal included in the first image signal and another reference signal included in the other image signal for synchronizing with the first reference signal the phase of the other reference signal and for supplying a display clock signal having a frequency in accordance with the level of the phase difference signal to the other image signal output unit,
the other image signal output unit outputting the other image signal based on the display use clock signal from the phase synchronization signal generation circuit.

12. An image signal processing apparatus as set forth in claim 11, wherein the synchronization signal generation circuit has:
a phase comparison circuit for calculating a phase difference between the first reference signal and the other reference signal,
a filter circuit for passing a low frequency component of the phase difference signal calculated at the phase comparison circuit, and
a voltage-controlled oscillation circuit for generating an oscillation signal having an oscillation frequency corresponding to the voltage of the low frequency component of the phase difference output from the filter circuit.

13. An image signal processing apparatus as set forth in claim 12, wherein the phase comparison circuit and the filter circuit form a circuit having large DC gains for reducing the steady phase error.

14. An image signal processing apparatus as set forth in claim 12 or 13, wherein
the phase comparison circuit and the filter circuit are arranged in the vicinity of the first image signal output unit, and
the voltage-controlled oscillation circuit is arranged in the vicinity of the corresponding image signal output unit.

15. An image signal processing apparatus as set forth in claim 14, wherein
said phase difference signal is a voltage signal,
a voltage to current conversion circuit for converting the voltage indicating said phase difference to a current and outputting the converted current, is provided at a stage following to said filter circuit, and
a current to voltage conversion circuit for converting the current output from the voltage to current conversion circuit to voltage, is provided at an input stage of the voltage-controlled oscillation circuit.

16. An image signal processing apparatus as set forth in claim 11, wherein said first reference signal and other reference signal are vertical synchronization signals of said first image signal and other image signal.

17. A method for synchronizing with a first image signal including a first reference signal output from a first image signal output unit the phase of another image signal to be combined with the first image signal and generated based on a display use clock in another image signal output unit, including:
generating a phase difference signal between a first reference signal included in the first image signal and another reference signal included in the other image signal for synchronizing with the first reference signal the phase of the other reference signal; and
generating a display use clock signal having a frequency in accordance with the level of the phase difference signal.

18. A phase synchronization method as set forth in claim 17, further including passing a low frequency component of said phase difference signal and generating a display use clock signal having a frequency in accordance with the level of the phase difference signal.

19. A phase synchronization method as set forth in claim 17, further including
transferring said phase difference signal converted to a current and
converting a current showing said transferred phase difference signal to a voltage to generate a display use clock signal having a frequency in accordance with its level.

20. A phase synchronization method as set forth in claim 17, wherein said first reference signal and other reference signal are vertical synchronization signals of said first image signal and other image signal.
